# EUROPÄISCHE PATENTANMELDUNG

(11) **EP 1 119 162 A1**
(43) Veröffentlichungstag der Anmeldung: **25.07.2001**
(21) Anmeldenummer: 00101105.5
(22) Anmeldetag: 20.01.2000
(51) Int. Cl.: H04M 1/725

(54) **Fernkonfiguration von Bedienoberflächen**

(71) Anmelder: SIEMENS AKTIENGESELLSCHAFT, 80333 München (DE)
(72) Erfinder: Siewerth, Jörg, 82024 Taufkirchen (DE)

(57) **Zusammenfassung**

Die Erfindung betrifft ein Verfahren zur drahtlosen Kommunikation zwischen Endgeräten der Kommunikations- und/oder der Datenverarbeitungstechnik, bei dem jeweils zwischen einem rufenden und gerufenen Endgeräten ein Übertragungsnetz aufgebaut wird. Erfindungsgemäß sendet bei einer Anfrage das gerufenen Endgerät funktionalitätsbezogene Daten aus.

## Beschreibung

Die Erfindung betrifft ein Verfahren gemäß dem Oberbegriff des Patentanspruchs 1 sowie Endgeräte gemäß dem Oberbegriff des Patentanspruchs 2.

Die Erfindung geht aus von Endgeräten der Kommunikations- und/oder der Datenverarbeitungstechnik. Kommunikationsendgeräte sind beispielsweise Telefone, insbesondere Mobiltelefone. Endgeräte der Datenverarbeitungstechnik sind Personalcomputer und ihre mobilen Varianten wie Laptops und Notebooks, sowie Peripheriegeräte, wie Drucker, Scanner, Projektoren und sonstigen Ein- und Ausgabegeräte.

Mit Bluetooth steht in Kürze eine universelle Funkschnittstelle für die drahtlose Kommunikation solcher elektronischer Geräte untereinander zur Verfügung. Beispiele für Anwendungsszenarien hierfür sind:
- sofortiger Datenaustausch mit Konferenzteilnehmern für Audio- und Videokonferenzen,
- drahtlose Ansteuerung eines Projektors,
- drahtlose Verbindung zwischen Personalcomputer und Mobiltelefon beziehungsweise Drucker,
- Anschluss einer Freisprecheinrichtung an einen mobilen Computer,
- Anschluss einer Kamera an ein Mobilfunkgerät,
- automatisches Synchronisieren von Dateien, insbesondere von Adress- beziehungsweise Telefonbüchern im Handy, im Personalcomputer und beispielsweise im Palmtop,
- usw.

Das Bluetooth-Konzept ist in einem Artikel der Funkschau, Heft 9 von 1999, Seite 34 und ff, und die Bluetooth-Übertragung ist in einem Artikel ebenfalls in der Funkschau, Heft 15 von 1999, ab Seite 76 ausführlich beschrieben. Bei den folgenden Ausführungen werden diese Artikel als bekannt vorausgesetzt und die gleiche Terminologie verwendet.

Bluetooth-Geräte beziehungsweise deren Bluetooth-Kommunikationsmodule, die sich innerhalb der zulässigen Reichweite von ca 1 bis 10 Metern befinden, können zueinander sogenannte ad-hoc-Verbindungen aufbauen. Dabei wird jedes Kommunikationsmodul als gleichberechtigter Partner mit identischen Hardware-Leistungsmerkmalen betrachtet. Im Gegensatz zu cellularen Systemen wird kein Unterschied zwischen Endgeräten und Basisstationen gemacht. Zwei oder mehr Bluetooth-Einheiten , die auf denselben Kanal zugreifen, bilden ein sogenannte Pikonetz. Ein Gerät innerhalb des Pikonetzes, der Master regelt den auf dem Kanal stattfindenden Datenverkehr. Generell kann jede beliebige Einheit Master werden, per definitionem wird diese Rolle von der Einheit übernommen, die das Pikonetz einrichtet.

Einheiten, die nicht zu den Teilnehmern eines Pikonetzes gehören, gehen in einen Stand-by-Modus. In diesem Modus überprüfen sie periodisch, ob Suchanfragen für sie vorliegen.

Für den Aufbau einer Verbindung zwischen zwei Bluetooth-Kommunikationsmodulen, beispielsweise einem Computer und einem Drucker, muss die rufende Einheit die Identität der innerhalb ihres Übertragungsbereiches liegenden Einheiten kennen. In einer Abfrageprozedur versendet die rufende Einheit einen für alle Bluetooth-Module identischen Anfragezugangscode über spezielle für solche Anfragen vorgesehen Weckträger. Sobald ein Modul diese Anfrage erhält, sendet es ein Paket mit seiner Identität und seinem Takt zurück. Nach der Erfassung sämtlicher Antwortpakete kann das rufende Modul nun ein bestimmtes gerufenes Modul auswählen.

Der Besitzer eines Notebooks möchte beispielsweise eine Datei an einem bluetoothfähigen Drucker ausdrucken. Das Notebook fungiert hier als Master und der Drucker als Slave. Zur Vorbereitung muss das bluetoothfähige Kommunikationsmodul des Notebooks einen Drucker über dessen Kommunikationsmodul suchen. Der Benutzer erhält dabei keine Rückmeldung über den Leistungsumfang des Druckers, das heißt ob es sich um einen Schwarz/Weiss- oder um einen Farbdrucker handelt.

Der Erfindung liegt die Aufgabe zugrunde, die Bedienung von bluetooth-ähnlichen Funkschnittstellen komfortabel auszugestalten.

Diese Aufgabe wird erfindungsgemäß für ein Verfahren durch die im Patentanspruch 1 und für Endgeräte durch die in Patentansprüchen 2 und 5 angegebenen Merkmale gelöst.

Die Erfindung ermöglicht eine benutzerfreundliche Bedienung von Endgeräten der Kommunikations- und der Datenverarbeitungstechnik, die über eine Funkschnittstelle beziehungsweise über ein Funk-Kommunikationsmodul in Verbindung stehen. Der Datentransfer zwischen den Kommunikationsmodulen läuft zumindest ähnlich wie bei Bluetooth ab. Die Erfindung ist aber nicht auf Bluetooth beschränkt. Die Funkkommunikationsmodule können insbesondere bei entsprechender Ausgestaltung der Funkteile über größere Entfernungen hinweg in Verbindung treten, als dies bei Bluetooth vorgesehen ist.

Die vorliegende Erfindung ermöglicht eine automatische Konfiguration der Benutzeroberfläche eines rufenden Gerätes, das heisst beispielsweise des Displays eines Handys beziehungsweise eines Mobiltelefons, in Abhängigkeit davon, welche Funktionen oder Funktionalitäten durch die gerufenen Geräte zur Verfügung gestellt werden. Die gerufenen Geräte können beispielsweise Drucker, Projektoren oder auch Scanner sein.

Die Erfindung geht hierbei aus von zwei bluetoothfähigen Endgeräten, beispielsweise einem Mobiltelefon und einem Drucker. Das Mobiltelefon steht hierbei als Vertreter für ein Kommunikationsendgerät, und der Drucker als Vertreter für ein Endgerät der Datenverarbeitungstechnik.

Über Bluetooth können Funktionen verschiedener Geräte genutzt werden. Erfindungsgemäß senden die jeweiligen Geräte, hier beispielsweise der Drucker, Informationen darüber aus, welche Funktionen beziehungsweise Dienste durchgeführt werden können. Nach der Aktivierung des Druckers auf Grund einer Anfrage vom Mobiltelefon meldet er seine Funktionalität zum Mobiltelefon. Dies kann die Information "Drucker" oder speziell "Farbdrucker" sein. Auf dem Mobiltelefon kann beispielsweise ein entsprechender Text oder ein vorkonfiguriertes Icon auf der Anzeigeeinrichtung dargestellt werden. Durch Aufruf beziehungsweise Aktivierung dieses Icons oder durch eine Markierung des entsprechenden Textes wird der Drucker aktiviert, und so wird beispielsweise eine E-Mail vom Mobiltelefon zum Drucker übertragen und dort ausgedruckt.

Sobald der Drucker seine Dienste über Bluetooth anbietet, erscheint im Display des Handys beispielsweise automatisch eine neue Softkeytaste "Print". Der Nutzer kann damit den Ausdruck der E-Mails durch Druck auf diese Taste auslösen. Diese Taste ist nur dann auf dem Display sichtbar beziehungsweise aktivierbar, wenn ein entsprechender Drucker in Reichweite von Bluetooth, beziehungsweise verallgemeinert in Reichweite des Funk-Kommunikationsmoduls, verfügbar ist. Die Oberfläche des Funktelefons konfiguriert sich damit automatisch gemäß den jeweiligen verfügbaren Funktionen des Druckers, oder allgemein gemäß den verfügbaren Funktionalitäten im erreichbaren Umfeld.

Kern der Erfindung ist die automatische Sichtbarmachung der verfügbaren Funktionen oder Funktionalitäten und bedarfsweise der Status-Informationen auf einer Anzeigeeinrichtung. Erfindungsgemäß werden hierzu von einem gerufenen Endgerät die Funktionalität ausgesendet, die daraufhin am rufenden Endgerät auf der Anzeigeeinrichtung beziehungsweise Bedienoberfläche dargestellt werden kann.

Bei einer Weiterbildung der Erfindung werden beispielsweise vom gerufenen Endgerät Daten über den Standort ausgesendet und ebenfalls auf der Bedienoberfläche des Mobilfunkgerätes dargestellt. Dies ist vorteilhaft für den Benutzer, wenn der Drucker sich beispielsweise in einem benachbarten Raum befindet. Eine umständliche Suche nach ausgedruckten Papieren entfällt hierdurch.

Bei einer anderen Weiterbildung der Erfindung wird beispielsweise vom Drucker die entsprechende Treiber-Software zur Verfügung gestellt. Das heisst, der Drucker als gerufener Bluetooth-Slave sendet das entsprechende Datenpaket an das rufende Handy als Bluetooth-Master. Das Handy oder Mobilfunkgerät ist damit auch ohne vorinstallierte Treiber in der Lage, ein druckbereites Endgerät entsprechend seiner Anforderungen anzusteuern.

## Patentansprüche

1. Verfahren zur drahtlosen Kommunikation zwischen Endgeräten der Kommunikations- und/oder der Datenverarbeitungstechnik, bei dem jeweils zwischen einem rufenden und gerufenen Endgeräten ein Übertragungsnetz aufgebaut wird,
**dadurch gekennzeichnet**
daß bei einer Anfrage das gerufenen Endgerät funktionalitätsbezogene Daten aussendet.

2. Endgerät der Kommunikations- und/oder der Datenverarbeitungstechnik mit einem Funk-Kommunikationsmodul zur drahtlosen Verbindung von weiteren Endgeräten mit gleichartigen Kommunikationsmodulen, wobei jeweils zwischen einem rufenden und gerufenen Endgeräten ein Übertragungsnetz aufgebaut wird,
**dadurch gekennzeichnet**
daß bei einer Anfrage das Endgerät als gerufenes Endgerät funktionalitätsbezogene Daten aussendet.

3. Endgerät nach Anspruch 2,
**dadurch gekennzeichnet**
daß das Endgerät als gerufenes Endgerät eine für seine Funktionalität benötigte Treiber-Software aussendet.

4. Endgerät nach Anspruch 2 oder 3,
**dadurch gekennzeichnet**
daß das Endgerät als gerufenes Endgerät standortbezogene Daten aussendet.

5. Endgerät der Kommunikations- und/oder der Datenverarbeitungstechnik mit einem Funk-Kommunikationsmodul zur drahtlosen Verbindung von gleichartigen Kommunikationsmodulen, wobei jeweils zwischen einem rufenden und gerufenen Endgeräten ein Übertragungsnetz aufgebaut wird,
**dadurch gekennzeichnet**
daß das Endgerät als rufendes Endgerät vom gerufenen Endgerät ausgesendete funktionalitätsbezogene Daten auf einer Bedienoberfläche darstellt.

6. Endgerät nach Anspruch 5,
**dadurch gekennzeichnet**
daß das Endgerät als rufendes Endgerät vom gerufenen Endgerät ausgesendete standortbezogene Daten auf der Bedienoberfläche darstellt.
